(19) Europäisches Patentamt
European Patent Office
Office européen des brevets

(11) EP 4 636 888 A1

(12) # EUROPEAN PATENT APPLICATION
published in accordance with Art. 153(4) EPC

(43) Date of publication:
**22.10.2025 Bulletin 2025/43**

(21) Application number: **22968840.3**

(22) Date of filing: **20.12.2022**

(51) International Patent Classification (IPC):
***H01M 10/0567*** *(2010.01)*

(52) Cooperative Patent Classification (CPC):
**H01M 10/0567;** Y02E 60/10

(86) International application number:
**PCT/CN2022/140273**

(87) International publication number:
**WO 2024/130537 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Dongguan Amperex Technology Limited**
**Dongguan City, Guangdong Province, PRC 523000 (CN)**

(72) Inventors:
- **WANG, Xiang**
**Dongguan City, Guangdong 523000 (CN)**
- **WANG, Rui**
**Dongguan City, Guangdong 523000 (CN)**
- **TANG, Chao**
**Dongguan City, Guangdong 523000 (CN)**

(74) Representative: **Icosa**
**83 avenue Denfert-Rochereau**
**75014 Paris (FR)**

(54) **ELECTROLYTE, ELECTROCHEMICAL APPARATUS AND ELECTRONIC APPARATUS**

(57) This application relates to an electrolyte, an electrochemical device, and an electronic device. The electrolyte includes a compound of Formula (I) and a fluorocarbonate compound. When the electrolyte in this application is applied to the electrochemical device, coulombic efficiency, cycling performance, and high-temperature storage performance of the electrochemical device can be improved.

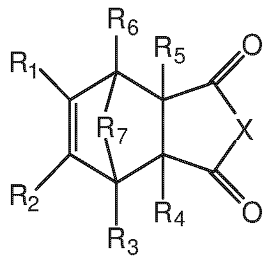

Formula (I)

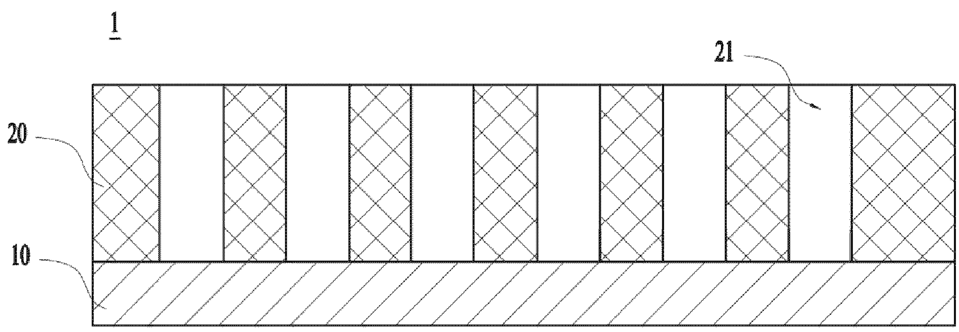


FIG. 1

EP 4 636 888 A1

## Description

### TECHNICAL FIELD

This application relates to the field of battery technologies, and in particular, to an electrolyte, an electrochemical device, and an electronic device.

### BACKGROUND

As a portable electrochemical device, a lithium-ion battery has been widely used in an electronic product such as a mobile phone, a laptop computer, or a camera in recent years. Meanwhile, consumers have a higher requirement on energy density, high-temperature safety, and service life of the lithium-ion battery.

### SUMMARY

This application provides an electrolyte, an electrochemical device, and an electronic device. When the electrolyte is applied to the electrochemical device, coulombic efficiency, cycling performance, and high-temperature storage performance of the electrochemical device can be improved.

According to a first aspect, this application provides an electrolyte. The electrolyte includes a compound of Formula (I) and a fluorocarbonate compound,

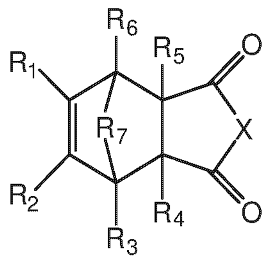

Formula (I),

where

in Formula (I), X is selected from an oxygen atom or N-$R_8$; $R_1$, $R_2$, $R_3$, $R_4$, $R_5$, $R_6$, and $R_8$ are each independently selected from a hydrogen atom, a halogen atom, substituted or unsubstituted $C_1$ to $C_{10}$ alkyl, substituted or unsubstituted $C_2$ to $C_{10}$ alkenyl, substituted or unsubstituted $C_2$ to $C_{10}$ alkynyl, substituted or unsubstituted $C_6$ to $C_{10}$ aryl, substituted or unsubstituted $C_1$ to $C_{10}$ alkoxy, substituted or unsubstituted $C_2$ to $C_{10}$ enyloxy, substituted or unsubstituted $C_2$ to $C_{10}$ alkynyloxy, substituted or unsubstituted $C_6$ to $C_{10}$ aryloxy, substituted or unsubstituted $C_1$ to $C_{10}$ alkoxyalkyl, substituted or unsubstituted $C_1$ to $C_{10}$ carboxyl, substituted or unsubstituted $C_2$ to $C_{10}$ carboxylate, substituted or unsubstituted $C_2$ to $C_{10}$ carbonate, cyano, or amino, a substituted or unsubstituted $C_1$ to $C_{10}$ nitrogen-containing group, a substituted or unsubstituted $C_1$ to $C_{10}$ sulfur-containing group, a substituted or unsubstituted $C_1$ to $C_{10}$ boron-containing group, a substituted or unsubstituted $C_1$ to $C_{10}$ silicone-containing group, or a substituted or unsubstituted $C_1$ to $C_{10}$ phosphorus-containing group; $R_7$ is selected from substituted or unsubstituted $C_1$ to $C_{10}$ alkylene, substituted or unsubstituted $C_3$ to $C_{10}$ cycloalkylene, a substituted or unsubstituted $C_1$ to $C_{10}$ oxygen-containing group, or a substituted or unsubstituted $C_1$ to $C_{10}$ nitrogen-containing group; and when substituted, a substituent group includes at least one of a halogen atom or cyanide.

In the electrolyte of this application, the contained fluorocarbonate compound can react with a lithium salt and undergo a strong film-forming reaction on a surface of a negative active material, to form a solid electrolyte interface film (SEI film), and stabilize following charge/discharge cycles of the negative electrode. However, the formed SEI film is rich in $Li_2CO_3$ components, which is unstable at a high temperature and prone to decomposition and gas production. The compound of Formula (I) is introduced and can have a polymerization reaction at a film-forming stage to introduce a rigid bridge ring structure in the SEI film, which can not only inhibit negative electrode expansion, reduce film-forming consumption of the electrolyte, and enhance first-cycle coulombic efficiency of the electrochemical device, but also effectively reduce an amount of the $Li_2CO_3$ components in the SEI film. Besides, an anhydride/amide group in the compound of Formula (I) synchronously forms a film on a surface of an active material, and minor amounts of water and acid in the electrolyte can be captured, to further inhibit the decomposition and the gas production of the $Li_2CO_3$ components in the SEI film at the high temperature, thereby improving high-temperature storage performance of the electrochemical device to a large extent. In addition, due to a steric hindrance of the bridge ring structure in the compound of Formula (I), relatively small film-forming impedance can be obtained, and dense accumulation of by-products on the

surface of the active material during cycling can be inhibited, so that transport of lithium ions between the active material and the electrolyte can be promoted, thereby further improving cycling performance of the electrochemical device.

In some embodiments, based on mass of the electrolyte, a mass percentage of the compound of Formula (I) is a%, where 0.01 ≤ a ≤ 7. In some embodiments, 0.1 ≤ a ≤ 5.

In some embodiments, a mass percentage of the fluorocarbonate compound is b%, where 3 ≤ b ≤ 20. In some embodiments, 10 ≤ b ≤ 20.

In some embodiments, 0.001 ≤ a/b ≤ 1. In some embodiments, 0.03 ≤ a/b ≤ 0.8.

In some embodiments, the compound of Formula (I) includes at least one of a compound of Formula (I-1) to a compound of Formula (I-20):

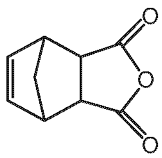 Formula (I-1), 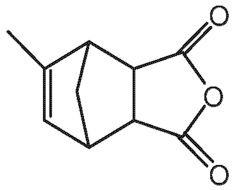 Formula (I-2), 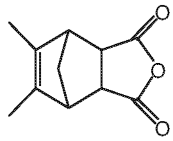

Formula (I-3), 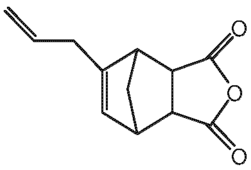 Formula (I-4), 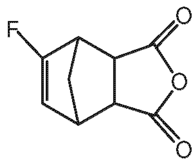 Formula (I-5),

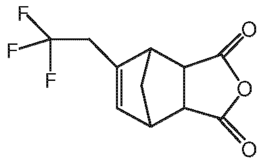 Formula (I-6), 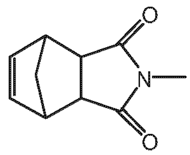 Formula (I-7),

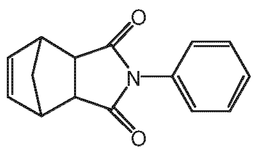 Formula (I-8), 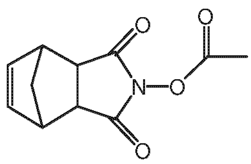 Formula (I-9),

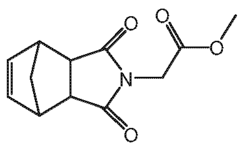 Formula (I-10), 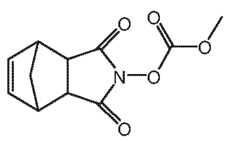 Formula (I-11),

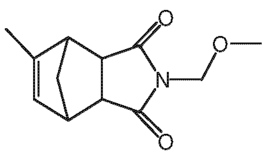 Formula (I-12), 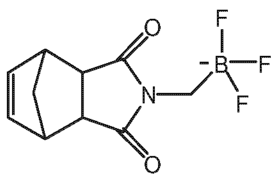 Formula (I-13),

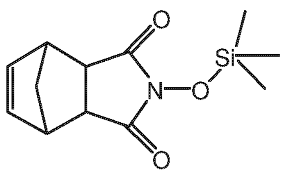 Formula (I-14), 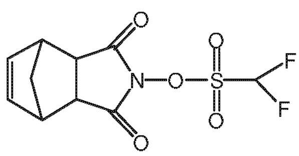 Formula (I-15),

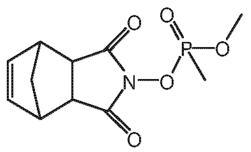 Formula (I-16), 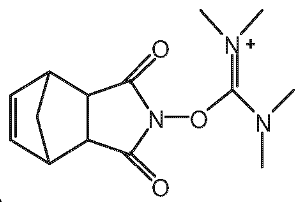 Formula (I-17),

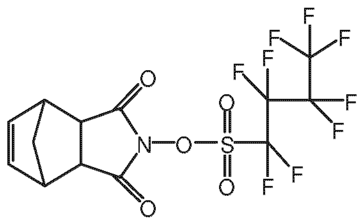 Formula (I-18), 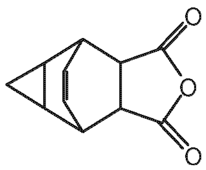 Formula (I-19),

or

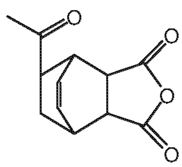 Formula (I-20).

In some embodiments, the fluorocarbonate compound includes at least one of fluoroethylene carbonate (FEC), 3,3,3-trifluoropropylene carbonate, methyl 2,2,2-trifluoroethyl carbonate (FEMC), difluoroethylene carbonate (DFEC), or bis(2,2,2-trifluoroethyl) carbonate.

According to a second aspect, this application provides an electrochemical device, including the electrolyte described in any embodiment of the first aspect of this application. The electrochemical device further includes a negative electrode plate, the negative electrode plate includes a negative active material layer, and the negative active material layer includes a silicon-based material and a carbon material.

In some embodiments, a cross-sectional area of the silicon-based material parallel to a thickness direction of the negative electrode plate is denoted as X1 $\mu m^2$, and a cross-sectional area of the carbon material parallel to the thickness direction of the negative electrode plate is denoted as X2 $\mu m^2$,satisfying: $0.01 \le X1/X2 \le 3$, and $0.13 \le a/(X1/X2) \le 100$.

In some embodiments, the negative active material layer includes a plurality of first holes extending along a thickness direction of the negative electrode plate; and the electrochemical device satisfies: $0.02 \le a/(\pi rd\sigma) \le 13$, where $\pi$ denotes a circumference; r $\mu$m denotes an average hole diameter of the plurality of first holes; d $\mu$m denotes an average hole depth of the plurality of first holes; and $\sigma$ per $mm^2$ denotes a quantity of first holes per square millimeter of the negative active material layer. In some embodiments, $0.05 \le a/(\pi rd\sigma) \le 8$.

In some embodiments, $8 \le r \le 110$. In some embodiments, $8 \le r \le 50$.

In some embodiments, $1 \le d \le 100$. In some embodiments, $3 \le d \le 80$.

In some embodiments, $0.5 \le \sigma \le 30$. In some embodiments, $5 \le \sigma \le 25$.

In some embodiments, the silicon-based material includes at least one of a silicon-oxygen composite material, a silicon-carbon composite material, or an elemental silicon.

In some embodiments, the carbon material includes at least one of artificial graphite, natural graphite, soft carbon, or hard carbon.

According to a third aspect, this application provides an electronic device, including the electrochemical device in any embodiment of the second aspect of this application.

## BRIEF DESCRIPTION OF DRAWINGS

To describe the technical solutions in embodiments of this application more clearly, the following simply describes the drawings to be used in embodiments of this application. Apparently, the drawings described below are merely some embodiments of this application. A person of ordinary skill in the art may derive other drawings from such drawings.

FIG. 1 is a schematic diagram of an implementation of a negative electrode plate of an electrochemical device according to this application.

FIG. 2 is a schematic diagram of another implementation of a negative electrode plate of an electrochemical device according to this application.

The accompanying drawings may not necessarily be drawn to actual scale.

Reference numerals:

X. Thickness direction;
1. Negative electrode plate;
10. Negative current collector;
20. Negative active material layer; 21. First hole

## DETAILED DESCRIPTION OF EMBODIMENTS

Embodiments of this application will be described in detail below. Throughout the specification of this application, identical or similar components and components having identical or similar functions are represented based on similar reference numerals. Embodiments described herein with respect to the accompanying drawings are illustrative, diagrammatic, and intended to provide a basic understanding of this application. Embodiments of this application should not be explained as a limitation of this application.

In addition, quantities, ratios, and other values are sometimes presented herein in a range format. It should be understood that such range formats are used for convenience and brevity, and it should be flexibly understood that such range formats not only include values explicitly designated as limitations of a range, but also include all individual values or subranges in the range as if each value and subrange were explicitly designated.

In specific implementations and claims, a list of items listed by the terms "one or more of", "one or more pieces of", "one or more types of", or other similar terms may imply any combination of the items listed. For example, if items A and B are listed, the phrase "at least one of A and B" implies A only; B only; or A and B. In another example, if items A, B, and C are listed, then the phrase "at least one of A, B, and C" means A only; B only; C only; A and B (excluding C); A and C (excluding B); B and C (excluding A); or all of A, B, and C. Item A may include a single component or a plurality of components. Item B may include a single component or a plurality of components. Item C may include a single component or a plurality of components.

The term "halogen atom" means a fluorine atom, a chlorine atom, a bromine atom, and the like.

The term "alkyl" covers straight and branched alkyl. The term "alkenyl" covers straight and branched alkenyl. The term "alkynyl" covers straight and branched alkynyl. The term "aryl" refers to a closed aromatic ring or ring system.

The term "alkoxy" refers to a group in which alkyl is connected to an oxygen atom by a single bond.

The term "enyloxy" means a group in which alkenyl is connected to an oxygen atom by a single bond.

The term "alkynyloxy" refers to a group in which alkynyl is connected to an oxygen atom by a single bond.

The term "aryloxy" means a group in which a closed aromatic ring or ring system is connected to an oxygen atom by a single bond.

The term "carboxylate" means a group containing -C(=O)-O-.

The term "carbonate" means a group containing -O-C(=O)-O-.

The term "nitrogen-containing group" refers to a group containing a nitrogen atom in the group, including amino, amide, and the like.

The term "sulfur-containing group" refers to a group containing a sulfur atom in the group, including alkylthiol, sulfonate, sulfate, sulfone, and the like.

The term "boron-containing group" refers to a group containing a boron atom in the group, including borate and the like.

The term "silicone-containing group" refers to a group containing a silicon atom in the group, including silyl, silicate, and the like.

The term "phosphorus-containing group" refers to a group containing a phosphorus atom in the group, including phosphate ester group, phosphite ester group, and the like.

The term "oxygen-containing group" refers to a group containing an oxygen atom in the group, including a chain anhydride group, a cyclic anhydride group, carboxylate, carbonate, alkoxy, alkoxyalkyl, ketone, and the like. The term "chain anhydride group" refers to a group formed by dehydration of organic carboxylic acid. For example, the chain anhydride group may be $C_2$ to $C_{10}$ chain anhydride groups. In some embodiments, the chain anhydride group may include a dicarboxylic anhydride group, a diacetic anhydride group, a dipropionic anhydride group, a dibutyric anhydride group, a divaleric anhydride group, and the like. The term "cyclic anhydride group" refers to a group in which anhydride groups form

a cyclic shape. For example, the cyclic anhydride group may be $C_4$ to $C_{10}$ cyclic anhydride groups. In some embodiments, the cyclic anhydride group may include a succinic anhydride group, a glutaric anhydride group, an adipic anhydride group, and the like.

## Electrolytic solution

According to a first aspect, this application provides an electrolyte. The electrolyte includes a compound of Formula (I) and a fluorocarbonate compound,

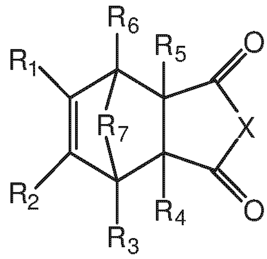

Formula (I),

where

in Formula (I), X is selected from an oxygen atom or N-$R_8$; $R_1$, $R_2$, $R_3$, $R_4$, $R_5$, $R_6$, and $R_8$ are each independently selected from a hydrogen atom, a halogen atom, substituted or unsubstituted $C_1$ to $C_{10}$ alkyl, substituted or unsubstituted $C_2$ to $C_{10}$ alkenyl, substituted or unsubstituted $C_2$ to $C_{10}$ alkynyl, substituted or unsubstituted $C_6$ to $C_{10}$ aryl, substituted or unsubstituted $C_1$ to $C_{10}$ alkoxy, substituted or unsubstituted $C_2$ to $C_{10}$ enyloxy, substituted or unsubstituted $C_2$ to $C_{10}$ alkynyloxy, substituted or unsubstituted $C_6$ to $C_{10}$ aryloxy, substituted or unsubstituted $C_1$ to $C_{10}$ alkoxyalkyl, substituted or unsubstituted $C_1$ to $C_{10}$ carboxyl, substituted or unsubstituted $C_2$ to $C_{10}$ carboxylate, substituted or unsubstituted $C_2$ to $C_{10}$ carbonate, cyano, or amino, a substituted or unsubstituted $C_1$ to $C_{10}$ nitrogen-containing group, a substituted or unsubstituted $C_1$ to $C_{10}$ sulfur-containing group, a substituted or unsubstituted $C_1$ to $C_{10}$ boron-containing group, a substituted or unsubstituted $C_1$ to $C_{10}$ silicone-containing group, or a substituted or unsubstituted $C_1$ to $C_{10}$ phosphorus-containing group; $R_7$ is selected from substituted or unsubstituted $C_1$ to $C_{10}$ alkylene, substituted or unsubstituted $C_3$ to $C_{10}$ cycloalkylene, a substituted or unsubstituted $C_1$ to $C_{10}$ oxygen-containing group, or a substituted or unsubstituted $C_1$ to $C_{10}$ nitrogen-containing group; and when substitution is performed, a substituent group includes at least one of a halogen atom or cyanide.

In the electrolyte of this application, the contained fluorocarbonate compound can react with a lithium salt and undergo a strong film-forming reaction on a surface of a negative active material, to form a solid electrolyte interface film (SEI film), and stabilize following charge/discharge cycles of the negative electrode. However, the formed SEI film is rich in $Li_2CO_3$ components, which is unstable at a high temperature and prone to decomposition and gas production. The compound of Formula (I) is introduced and can have a polymerization reaction at a film-forming stage to introduce a rigid bridge ring structure in the SEI film, which can not only inhibit negative electrode expansion, reduce film-forming consumption of the electrolyte, and enhance first-cycle coulombic efficiency of an electrochemical device, but also effectively reduce an amount of the $Li_2CO_3$ components in the SEI film. Besides, an anhydride/amide group in the compound of Formula (I) synchronously forms a film on the surface of the negative active material, and minor amounts of water and acid in the electrolyte can be captured, to further inhibit the decomposition and the gas production of the $Li_2CO_3$ components in the SEI film at the high temperature, thereby improving high-temperature storage performance of the electrochemical device to a large extent. In addition, due to a steric hindrance of the bridge ring structure in the compound of Formula (I), relatively small film-forming impedance can be obtained, and dense accumulation of by-products on the surface of the negative active material during cycling can be inhibited, so that transport of lithium ions between the negative active material and the electrolyte can be promoted, thereby further improving cycling performance of the electrochemical device.

In some embodiments, based on mass of the electrolyte, a mass percentage of the compound of Formula (I) is a%, and a mass percentage of the fluorocarbonate compound is b%, satisfying: $0.001 \le a/b \le 1$. In this application, by regulating $0.001 \le a/b \le 1$, the fluorocarbonate compound and the compound of Formula (I) can better synergize and cooperate with each other, thereby further improving the coulombic efficiency, the cycling performance, and the high-temperature storage performance of the electrochemical device. For example, a/b may be 0.001, 0.002, 0.005, 0.008, 0.01, 0.015, 0.02, 0.025, 0.03, 0.035, 0.04, 0.08, 0.1, 0.15, 0.2, 0.3, 0.4, 0.5, 0.6, 0.7, 0.8, 0.9, 1, or a value falling within a range formed by any two of the foregoing values. Optionally, $0.03 \le a/b \le 0.8$.

The compound of Formula (I) has a relatively active unsaturated double bond and the like, and therefore, is likely to form a film on the surface of the negative active material. When the mass percentage of the compound of Formula (I) in

the electrolyte is too large, the SEI film formed on the surface of the negative active material is too thick, and the film-forming impedance is large, which is not conducive to intercalating or deintercalating of lithium ions. When the mass percentage of the compound of Formula (I) is too small, it is not conducive to formation of a dense and even SEI film on the surface of the negative active material, and it is difficult to well protect the negative active material. In this case, in this application, by regulating $0.01 \leq a \leq 7$, the dense and even SEI film can be formed, so that the cycling performance and the high-temperature storage performance of the electrochemical device can be well improved; and impedance of a formed film layer is relatively low, which is conducive to improving kinetic performance of the electrochemical device. Exemplarily, the mass percentage a% of the compound of Formula (I) may be 0.01%, 0.02%, 0.05%, 0.08%, 0.1%, 0.2%, 0.5%, 0.8%, 1%, 1.2%, 1.5%, 1.8%, 2%, 2.5%, 2.8%, 3%, 3.5%, 3.8%, 4%, 4.5%, 5%, 6%, 7%, or a value falling within a range formed by any two of the foregoing values. Optionally, $0.1 \leq a \leq 5$.

In some embodiments, $3 \leq b \leq 20$. When the mass percentage of the fluorocarbonate compound is within the above range, it is conducive to formation of a good SEI film during initial charging/discharging and stabilizing the charging/discharging cycle after the negative electrode, and the formed SEI film has relatively low impedance, which can improve the kinetic performance of the electrochemical device. Besides, the fluorocarbonate compound has a fluorine substituent group, and the group has a relatively strong electron-withdrawing capability, which is prone to reduction and decomposition at a relatively high potential, and can promote repairing of the SEI film in a subsequent cycling process, thereby enhancing the cycling performance of the electrochemical device. Exemplarily, the mass percentage b% of the fluorocarbonate compound relative to the mass of the electrolyte may be 3%, 4%, 5%, 6%, 7%, 8%, 9%, 10%, 12%, 13%, 14%, 15%, 16%, 17%, 18%, 19%, 20%, or a value falling within a range formed by any two of the foregoing values. Optionally, $10 \leq b \leq 20$.

Exemplarily, the compound of Formula (I) includes at least one of a compound of Formula (I-1) to a compound of Formula (I-20):

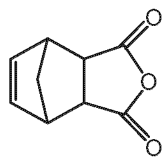 Formula (I-1), 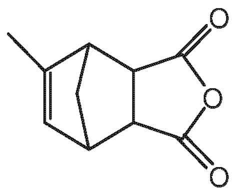 Formula (I-2), 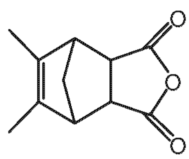

Formula (I-3), 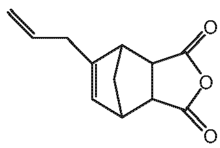 Formula (I-4), 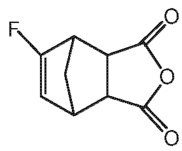 Formula (I-5),

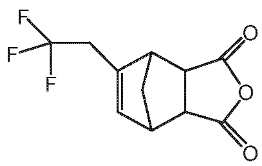 Formula (I-6), 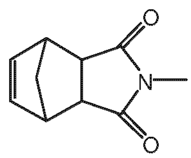 Formula (I-7),

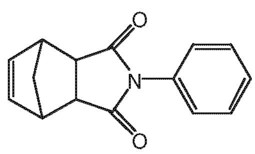 Formula (I-8), 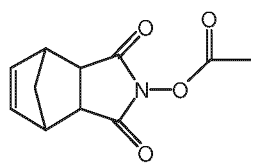 Formula (I-9),

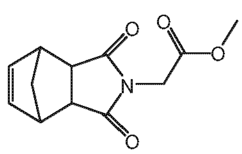 Formula (I-10), 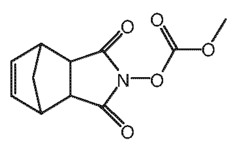 Formula (I-11),

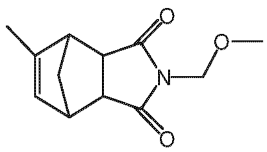 Formula (I-12), 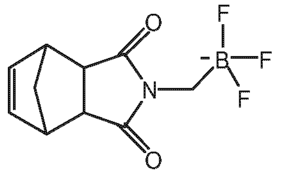 Formula (I-13),

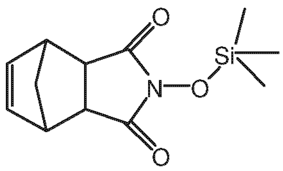 Formula (I-14), 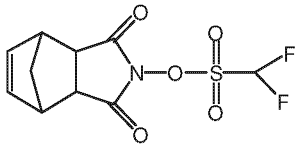 Formula (I-15),

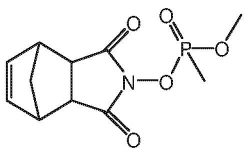 Formula (I-16), 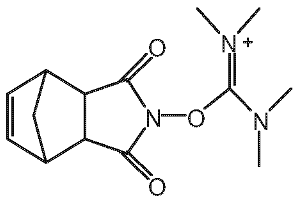 Formula (I-17),

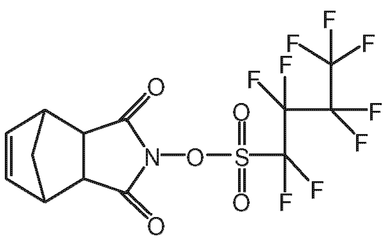 Formula (I-18), 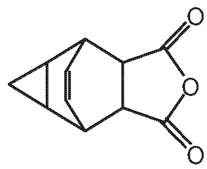 Formula (I-19),

or

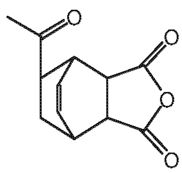 Formula (I-20).

In some embodiments, the fluorocarbonate compound includes at least one of fluoroethylene carbonate (FEC), 3,3,3-trifluoropropylene carbonate, methyl 2,2,2-trifluoroethyl carbonate (FEMC), difluoroethylene carbonate (DFEC), or bis(2,2,2-trifluoroethyl) carbonate.

In some embodiments, the electrolyte further includes an unsaturated cyclic carbonate compound, and the unsaturated cyclic carbonate compound includes at least one of vinylene carbonate or vinyl ethylene carbonate; and based on the mass of the electrolyte, a mass percentage of the unsaturated cyclic carbonate compound is 0.01% to 5%. The unsaturated cyclic carbonate compound has an unsaturated bond, and can have a cross-linking reaction with the compound of Formula (I) during charging/discharging of the electrochemical device, to promote even formation of the SEI film, which further improves the cycling performance and the high-temperature storage performance of the electrochemical device.

In some embodiments, the electrolyte further includes another non-aqueous organic solvent, such as one or more of a carbonate solvent, a lactone solvent, or an ether solvent. Exemplarily, the organic solvent may also include one or more of ethylene carbonate (EC), propylene carbonate (PC), butylene carbonate, ethyl methyl carbonate, dimethyl carbonate, diethyl carbonate (DEC), dipropyl carbonate, methylpropyl carbonate, ethylene propylene carbonate, γ-butyrolactone, γ-valerolactone, dimethoxyethane (DME), tetrahydrofuran (THF), or 1,3-dioxolane (DOL).

The non-aqueous organic solvent in the electrolyte may be a single non-aqueous organic solvent or a mixture of a plurality of non-aqueous organic solvents. When the mixture of solvents is used, a mixing ratio can be controlled based on desired performance of the electrochemical device.

The electrolyte in this application further contains an electrolyte salt. The electrolyte salt is an electrolyte salt known in the art for use in the electrochemical device. For a lithium-ion battery, a lithium salt is usually used as the electrolyte salt.

In some embodiments, the lithium salt includes at least one of an organic lithium salt and an inorganic lithium salt. Exemplarily, the lithium salt may include lithium hexafluorophosphate $LiPF_6$.

**Electrochemical device**

According to a second aspect, this application provides an electrochemical device. The electrochemical device includes a negative electrode plate and an electrolyte, the negative electrode plate includes a negative active material layer, the negative active material layer includes a negative active material, and the electrolyte may be an electrolyte in any embodiment of the first aspect of this application.

[Negative electrode plate]

As shown in FIG. 1, a negative electrode plate 1 includes a negative current collector 10 and a negative active material layer 20 provided on at least one surface of the negative current collector 10. The negative current collector 10 has two surfaces opposite to each other along a thickness direction X of the negative current collector 10. The negative active material layer 20 may be provided on one surface of the negative current collector 10 or on the two surfaces of the negative current collector 10.

In some embodiments, a structure of the negative electrode plate 1 is a structure of a negative electrode plate 1 that is known in the art and can be used in the electrochemical device.

The negative active material layer 20 may include one or more negative active materials. The negative active material may be selected from various substances that are conventionally known in the art, can reversibly intercalate or deintercalate active ions, and can be used as a negative active material in the electrochemical device. In some embodiments, the negative active material includes at least one of a carbon material, a silicon-based material, lithium metal, or a lithium metal alloy. In some embodiments, the carbon material may be selected from a plurality of carbon materials that can be used as a negative active material in the electrochemical device and are known in the art. In some embodiments, the carbon material includes at least one of natural graphite, artificial graphite, soft carbon, hard carbon, pyrolytic carbon, a mesocarbon microbead, or high temperature wrought carbon. In some embodiments, the silicon-based material includes at least one of a silicon-carbon composite material, an elemental silicon, or a silicon-oxygen composite material.

In some embodiments, the negative active material layer 20 includes a plurality of negative active materials, and the plurality of negative active materials can absorb and release active ions such as lithium ions. Due to different materials, different negative active materials have different advantages in specific capacity, structural stability, interfacial stability, and the like. In a reasonable design, overall performance of the negative active material layer 20 can be improved. In some embodiments, the negative active material includes a silicon-based material and a carbon material. A theoretical specific capacity of silicon is much greater than a theoretical specific capacity of graphite, and can reach 4200 mAh/g. Therefore, the silicon-based material can significantly improve energy density of the electrochemical device. However, during charging/discharging of the electrochemical device, the silicon-based material is prone to volumetric expansion and contraction, which leads to an irreversible gap between silicon-based materials. Especially during initial film formation of an SEI film, because the material expands to form a new interface, a large amount of electrolyte components and active lithium need to be consumed for a film-forming reaction, resulting in a decrease in first-cycle coulombic efficiency, which severely affects the energy density of the electrochemical device. Meanwhile, exposure of a large area of the new interface and an SEI film that has poor thermal stability lead to severe gas production during high-temperature storage of the electrochemical device, which affects safety performance of the electrochemical device under a high-temperature condition. Therefore, although usage of both the silicon-based material and the carbon material as the negative active material reduces a specific capacity of the negative active material layer 20 to a certain extent, the carbon material can significantly alleviate a volume change of the silicon-based material, thereby improving cycling performance and high-temperature storage performance of the electrochemical device. In some embodiments, a mass percentage of the silicon-based material is from 2% to 80% calculated based on mass of the negative active material. Exemplarily, the mass percentage of the silicon-based material is 2%, 5%, 10%, 20%, 30%, 40%, 50%, 60%, 70%, 80%, or a value falling within a range formed by any two of the foregoing values.

Since the negative active material layer 20 contains a plurality of negative active materials, a compound of Formula (I) has different surface film-forming areas and interfacial reaction activity on surfaces of different materials, and a larger surface film-forming area indicates stronger interfacial reaction activity and a higher mass percentage of the compound of Formula (I) can be thus adjusted. In addition, when adjusting the mass percentage of the compound of Formula (I), kinetic performance of the negative active material layer is considered, so that impedance of a negative

electrode plate 1 with a formed film is relatively low, and a charging/discharging capability of the electrochemical device is ensured.

In some embodiments, a cross-sectional area of the silicon-based material parallel to a thickness direction X of the negative electrode plate 1 is denoted as X1 $\mu m^2$,and a cross-sectional area of the carbon material parallel to the thickness direction X of the negative electrode plate 1 is denoted as X2 $\mu m^2$. In some examples, it is satisfied that: $0.01 \leq X1/X2 \leq 3$ and $0.13 \leq a/(X1/X2) \leq 100$.

As shown in FIG. 1 and FIG. 2, in some embodiments, the negative active material layer 20 includes a plurality of first holes 21 extending along a thickness direction X of the negative electrode plate 1. The first hole 21 may be a straight-through hole or a blind hole. The straight-through hole is, just as the name implies, a hole that runs through the negative active material layer 20 along the thickness direction X of the negative electrode plate 1, and the blind hole is a hole that does not run through the negative active material layer 20. The first hole 21 shown in FIG. 1 is a straight-through hole, and the first hole 21 shown in FIG. 2 is a blind hole.

The first hole 21 can promote the electrolyte to infiltrate the negative active material layer 20, guide transport of the active ions such as the lithium ions, reduce concentration polarization at the first hole 21 and an interface, significantly improve kinetic performance of the negative electrode plate 1, and facilitate preparation of a thick electrode plate, thereby increasing the energy density of the electrochemical device. Presence of the first hole 21 makes the negative active material layer 20 have more exposed interfaces, a specific surface area of the negative active material layer 20 increases, and film formation of the compound of Formula (I) can be performed stably at the first hole 21, which can alleviate expansion of the negative electrode plate 1, reduce film-formation consumption of the electrolyte, and improve the first-cycle coulombic efficiency of the electrochemical device.

In some embodiments, the electrochemical device satisfies: $0.02 \leq a/(\pi rd\sigma) \leq 13$, where $\pi$ is a circumference; r $\mu m$ denotes a value of an average hole diameter of the plurality of first holes 21; d $\mu m$ denotes an average hole depth of the plurality of first holes 21; and $\sigma$ per $mm^2$ denotes a quantity of first holes 21 per square millimeter of the negative active material layer. When the electrochemical device satisfies the above relation, the cycling performance and the first-cycle coulombic efficiency of the electrochemical device can be further improved. r and d are illustrated in FIG. 2. In some embodiments, $0.05 \leq a/(\pi rd\sigma) \leq 8$.

The first hole 21 may be a cylindrical hole, a polygonal cylindrical hole, or the like, and a cross-section of the cylindrical hole may be circular or circular alike. The average hole diameter of the plurality of first holes 21 is r $\mu m$. When a cross-section of the first hole 21 is circular, a circle diameter is the hole diameter; or when a cross-section of the first hole 21 is non-circular, the hole diameter is a diameter of an equivalent circle. In this application, it is further regulated that $8 \leq r \leq 110$, which can ensure a capability of the first hole 21 to absorb the electrolyte, and ensure overall structural stability of the negative active material layer 20. Exemplarily, the hole diameter r $\mu m$ of the first hole 21 may be 8 $\mu m$, 10 $\mu m$, 20 $\mu m$, 30 $\mu m$, 40 $\mu m$, 50 $\mu m$, 60 $\mu m$, 70 $\mu m$, 80 $\mu m$, 90 $\mu m$, 100 $\mu m$, 110 $\mu m$, or a value falling within a range formed by any two of the foregoing values.

The average hole depth of the plurality of first holes 21 is d $\mu m$. The average hole depth may be understood as an average height of the plurality of first holes 21 along the thickness direction X of the negative electrode plate 1. In this application, it is further regulated that $1 \leq d \leq 100$, which can ensure the capability of the first hole 21 to absorb the electrolyte, and ensure the overall structural stability of the negative active material layer 20. Exemplarily, the average hole depth d $\mu m$ of the plurality of first holes 21 may be 1 $\mu m$, 2 $\mu m$, 5 $\mu m$, 6 $\mu m$, 7 $\mu m$, 8 $\mu m$, 9 $\mu m$, 10 $\mu m$, 20 $\mu m$, 30 $\mu m$, 40 $\mu m$, 50 $\mu m$, 60 $\mu m$, 70 $\mu m$, 80 $\mu m$, 90 $\mu m$, 100$\mu m$, or a value falling within a range formed by any two of the foregoing values.

There are usually a plurality of first holes 21 for arrangement, and the plurality of first holes 21 may be regularly arranged such as arranged as an array, or may be irregularly arranged such as randomly arranged. The quantity of first holes 21 per square millimeter of the negative active material layer 20 on the negative current collector 10 is $\sigma$ per $mm^2$. In this application, it is further regulated that $0.5 \leq \sigma \leq 30$, which can ensure a capability of the overall negative active material layer 20 to absorb the electrolyte, and ensure the overall structural stability of the negative active material layer 20. Exemplarily, the quantity $\sigma$ per $mm^2$ of first holes 21 may be 0.5 per $mm^2$, 1 per $mm^2$, 2 per $mm^2$, 5 per $mm^2$, 6 per $mm^2$, 7 per $mm^2$, 8 per $mm^2$, 9 per $mm^2$, 10 per $mm^2$, 20 per $mm^2$, 30 per $mm^2$, or a value falling within a range formed by any two of the foregoing values.

In some embodiments, the negative active material layer 20 may be formed by mixing materials to make a slurry and performing single-layer coating; and specifically, formed by coating a slurry made of a single negative active material, or formed by performing single-layer coating of an even slurry made of a mixture of a plurality of negative active materials. The negative active material layer 20 is of a single-layer structure, and the first hole 21 may be a straight-through hole or a blind hole.

The first hole 21 may be made in the negative active material layer 20 in a manner such as mechanical processing or laser processing after the negative active material layer 20 is formed. The mechanical processing manner means that a metal fine needle array mold is used to mechanically implement hole pouching on a surface of the negative electrode plate 1 at fixed points and at a fixed speed. The laser processing manner means that a laser is used to emit laser light, and the laser light is guided to a surface of the negative electrode plate 1 through a rotating mirror and a lens to form a porous

structure on the negative electrode plate 1 at fixed points.

In some embodiments, the negative current collector 10 is metal, such as, but not limited to, copper foil, nickel foil, stainless steel foil, titanium foil, nickel foam, copper foam, a polymer substrate covered with conductive metal, or a combination thereof.

In some embodiments, the negative active material layer 20 may further include a negative electrode binder. In an example of the negative electrode binder, the negative electrode binder includes at least one of a poly(vinylidene fluoride-co-hexafluoropropylene) (PVDF-co-HFP), polyvinylidene fluoride, polyacrylonitrile, acrylate polymer, poly(vinyl alcohol), carboxymethyl cellulose, hydroxypropyl cellulose, poly(vinyl chloride), carboxylated poly(vinyl chloride), polyvinyl pyrrolidone, polyurethane, poly(tetrafluoroethylene), styrene-butadiene rubber, acrylic styrene-butadiene rubber, epoxy resin, or nylon. In some embodiments, a ratio of the mass of the negative active material to mass of the negative electrode binder is (80 to 100):(0.5 to 10). A negative electrode plate that satisfies the above mass ratio has good overall performance, which enables the negative active material layer to have good adhesion properties and also ensures that the electrochemical device has relatively high energy density.

In some embodiments, the negative active material layer 20 may further include a negative electrode conductive agent. In an example of the negative electrode conductive agent, the negative electrode conductive agent is used to provide conductivity for an electrode, and may include any conductive material as long as the conductive material does not cause a chemical change. The negative electrode conductive agent includes any one of a carbon-based material, a metal-based material, a conductive polymer, or a mixture thereof. In some embodiments, the carbon-based material includes at least one of carbon black, acetylene black, Ketjen black, carbon fiber, carbon nanotube, or graphene. In some embodiments, the metal-based material includes at least one of metal powder or metal fiber of copper, nickel, aluminum, silver, or the like. In some embodiments, the conductive polymer includes a polyphenylene derivative.

In some embodiments, a method for preparing the negative electrode plate 1 is a method that is known in the art and can be used for preparing a negative electrode plate 1 in an electrochemical device. In some embodiments, in preparation of a negative electrode slurry, the negative active material and the negative electrode binder are usually added. The negative electrode conductive agent and a thickening agent are added as needed, and then dissolved or dispersed in a solvent to prepare the negative electrode slurry. The solvent is volatilized and removed in a drying process. The solvent is a solvent that is known in the art and can be used in the negative active material layer 20, and the solvent is, for example, but not limited to, water. The thickener is a thickener that is known in the art and can be used in the negative active material layer 20, and the thickener is, for example, but not limited to, sodium carboxymethyl cellulose.

This application constitutes no particular limitation on a mixing ratio of the negative active material, the negative electrode binder, the negative electrode conductive agent, to the thickening agent in the negative active material layer 20, and the mixing ratio can be controlled based on desired performance of the electrochemical device.

### Positive electrode plate

A positive electrode plate is a positive electrode plate that is known in the art and can be used in an electrochemical device. In some embodiments, the positive electrode plate includes a positive current collector and a positive active material layer. The positive active material layer is disposed on a surface of the positive current collector. The positive active material layer includes a positive active material.

In some embodiments, a structure of the positive electrode plate is a structure of a positive electrode plate that is known in the art and can be used in an electrochemical device.

In some embodiments, the positive current collector is metal, for example, but not limited to, aluminum foil.

The positive active material may be selected from various substances that are known in the art, can reversibly intercalate or deintercalate active ions, and can be used as a positive active material in an electrochemical device. For a lithium-ion battery, a positive active material usually includes a lithium ion.

In some embodiments, the positive active material includes a positive electrode material that can absorb and release lithium, including, but not limited to, lithium cobalt oxide, lithium nickel manganese cobalt oxide, lithium nickel cobalt aluminum oxide, lithium manganate, lithium manganese iron phosphate, lithium iron phosphate, and lithium-rich manganese-based materials.

In some embodiments, the positive active material layer further includes a positive electrode binder and a positive electrode conductive agent. The positive electrode binder is used to improve performance of bonding between positive active material particles and between the positive active material particles and the current collector. In some embodiments, the positive electrode binder includes at least one of poly(vinyl alcohol), carboxymethyl cellulose, hydroxypropyl cellulose, diacetyl cellulose, poly(vinyl chloride), carboxylated poly(vinyl chloride), polyvinyl pyrrolidone, polyurethane, poly(tetrafluoroethylene), polyvinylidene fluoride, poly(vinylidene fluoride-co-hexafluoropropylene), styrene-butadiene rubber, acrylic styrene-butadiene rubber, epoxy resin, or nylon. The positive electrode conductive agent is used to provide conductivity for an electrode, and may include any conductive material as long as the conductive material does not cause a chemical change. In some embodiments, the positive electrode conductive agent includes at least one of carbon black,

acetylene black, Ketjen black, carbon fiber, carbon nanotube, graphene, metal powder, metal fiber, or a polyphenylene derivative. In some embodiments, metal in the metal powder and the metal fiber includes at least one of copper, nickel, aluminum, or silver.

In some embodiments, a method for preparing the positive electrode plate is a method that is know in the art and can be used for preparing a positive electrode plate in an electrochemical device. In some embodiments, in preparation of a positive electrode slurry, the positive active material, the positive electrode binder, and the positive electrode conductive agent are usually added, and then dissolved or dispersed in a solvent to prepare the positive electrode slurry. The solvent is volatilized and removed in a drying process. The solvent is a solvent that is known in the art and that can be used in the positive active material layer, for example, but not limited to, N-methyl-pyrrolidone (NMP).

### Separator

A separator is a separator that is known in the art and can be used in an electrochemical device, for example, but not limited to, a polyolefin microporous film. In some embodiments, the separator includes at least one of polyethylene (PE), an ethylene-propylene copolymer, polypropylene (PP), an ethylene-butene copolymer, an ethylene-hexene copolymer, or an ethylene-methyl methacrylate copolymer.

In some embodiments, the separator is a single-layer separator or a multi-layer separator.

In some embodiments, the separator is coated with a coating. In some embodiments, the coating includes at least one of an organic coating and an inorganic coating, where the organic coating is selected from at least one of polyvinylidene fluoride, a vinylidene fluoride-hexafluoropropylene copolymer, polyacrylonitrile, polyimide, an acrylonitrile-butadiene copolymer, an acrylonitrile-styrene-butadiene copolymer, an acrylate polymer, an acrylic acid-styrene copolymer, poly(dimethylsiloxane), sodium polyacrylate, or sodium carboxymethyl cellulose; and the inorganic coating includes an inorganic particle and a binder, and the inorganic particle includes at least one of $SiO_2$, $Al_2O_3$, CaO, $TiO_2$, $ZnO_2$, MgO, $ZrO_2$, or $SnO_2$.

This application constitutes no particular limitation on a morphology and thickness of the separator. A method for preparing the separator is a method that is known in the art and can be used for preparing a separator in an electrochemical device.

### Electronic device

This application further provides an electronic device, including the electrochemical device described above in this application.

The electronic device of this application is any electronic device such as, but not limited to, a laptop computer, a pen-input computer, a mobile computer, an e-book player, a portable telephone, a portable fax, a portable photocopier, a portable printer, a head-mounted stereo headset, a video tape recorder, a liquid crystal display television, a handheld cleaner, a portable CD player, a minidisc, a transceiver, an electronic notebook, a calculator, a memory card, a portable tape recorder, a radio, a back-up power supply, an electric motor, an automobile, a motorcycle, a power-assisted bicycle, a bicycle, a lighting device, a toy, a game console, a clock, an electric tool, a flashing light, a camera, a large storage battery for household use, or a lithium-ion capacitor. It should be noted that the electrochemical device of this application is applicable to an energy storage power station, a marine transportation carrier, and an air transportation carrier in addition to the above example electronic devices. An air transportation carrier device includes an air transportation carrier device within the atmosphere and an air transportation carrier device outside the atmosphere.

The technical solutions of this application are further described below by using a lithium-ion battery as an example and with reference to comparative embodiments and embodiments, but are not limited thereto. In the following embodiments and comparative examples, reagents, materials, and apparatuses used can be obtained commercially or synthetically unless otherwise stated.

### Embodiments and Comparative embodiments

### Preparation of the lithium-ion battery

(1) Preparation of positive electrode plate

Mixing a positive active material lithium cobalt oxide, a conductive agent Super P, and a binder poly(vinylidene fluoride) in a weight ratio of 97:1.5:1.5, add N-methyl-pyrrolidone (NMP), and stirring evenly under the action of a vacuum blender, to obtain a positive electrode slurry, where a solid content of the positive electrode slurry is 72 wt%. Evenly coating one surface of a positive current collector aluminum foil with the positive electrode slurry, and drying at 85 °C to obtain a positive electrode plate with one surface coated with a positive active material layer. Repeating the above step on the other

surface of the positive current collector aluminum foil, to obtain a positive electrode plate with both surfaces coated with positive active material layers. Performing cold pressing, cutting, and slitting, and drying for 4h under an 85°C vacuum condition to obtain a positive electrode plate.

(2) Preparation of negative electrode plate

Mixing a negative active material (a mixture of a carbon material and a silicon-based material), a conductive agent Super P, sodium carboxymethyl cellulose (CMC-Na), and styrene-butadiene rubber (SBR) in a weight ratio of 96.2:1.5:0.5:1.8, adding deionized water, and evenly stirring under the action of a vacuum blender to obtain a negative electrode slurry, where a solid content of the negative electrode slurry is 54 wt%. Evenly coating one surface of a negative current collector copper foil with the negative electrode slurry, and drying at 85 °C to obtain a negative electrode plate with one surface coated with a negative active material layer. Repeating the above step on the other surface of the negative current collector cooper foil, to obtain a negative electrode plate with both surfaces coated with negative active material layers. Performing cold pressing, cutting, and slitting, and drying for 12 h under a 120°C vacuum condition to obtain a negative electrode plate.

In Embodiments 2-1 to 2-14 and Comparative embodiment 2-1, holes are further made on a surface of the negative active material layer based on conditions in Table 2 in a manner of mechanical processing.

(3) Preparation of electrolyte

In a dry argon atmosphere glove box, mixing ethylene carbonate (EC), propylene carbonate (PC), and diethyl carbonate(DEC) in a weight ratio of 1:2:7, and adding a fluorocarbonate compound and an additive. After fully stirring, adding a lithium salt $LiPF_6$ and evenly mixing to obtain an electrolyte. A mass percentage of each material is obtained through calculation based on mass of the electrolyte, and a mass percentage of the $LiPF_6$ is 12.5% based on the mass of the electrolyte.

(4) Preparation of separator

A polyethylene (PE) microporous film with a thickness of 8 μm is selected as a separator.

(5) Preparing a lithium-ion battery

Stacking a positive electrode plate, a separator, and a negative electrode plate in order, so that the separator is located between the positive electrode plate and the negative electrode plate for separation. Then, performing winding to obtain a bare cell. Welding tabs and placing the bare cell in an outer packaging aluminum-plastic film, and injecting the foregoing prepared electrolyte into the dried bare cell. Performing processes such as vacuum encapsulation, standing, formation, shaping, and capacity testing, to obtain a pouch lithium-ion battery.

Data of Embodiments and Comparative embodiments are shown in Tables 1 and 2.

**Test part:**

**I. Parameter testing of a negative electrode plate**

Test of an area of particles in a cross-section of the negative electrode plate:

Taking a negative electrode plate containing a specific coated area, ensure a dry state, and fasten the negative electrode plate in a sample stage. Placing the sample stage with a support into a CP instrument (IB-09010CP/ion polisher) and adjusting to a proper position for cross-section polishing. After cutting is completed, taking out and placing the sample in an SEM-EDS instrument (ZEISS SEM-OXFORD EDS) for elemental quantitative analysis testing using a scanning electron microscopy. Taking any flat and clear region of a cut surface, adjusting a focus, contrast, and brightness at 3KX magnification, taking photos, and selecting point scan to collect EDS (energy spectrum) data.

An area of negative active material particles in a cross-section of the negative electrode plate is a sum of cross-section areas of single-type active materials in the selected observable region, and calculation is performed by image processing software for the selected region. A cross-sectional area of a silicon-based material is denoted as X1 $\mu m^2$; and a cross-sectional area of a carbon material is denoted as X2 $\mu m^2$.

**II. Lithium-ion battery performance test**

1. Initial coulombic efficiency test:

Charging, to 3.5 V with a constant current of 0.02 C, a lithium-ion battery that is after liquid injection and standing, then charging the battery to 3.9 V with a constant current of 0.2 C, and to 4.45 V with a constant current of 1 C, then charging the battery with a constant voltage to a current of 0.025 C, then standing for 5 min and discharging the battery to 2.75 V with a constant current of 0.2 C, and collecting an initial charging capacity C0 and an initial discharging capacity D0, to calculate that Initial coulombic efficiency $\eta$ = D0/C0 $\times$ 100%.

High-temperature storage test:

Charging a formed lithium-ion battery at a room temperature with a constant current of 1 C to 4.45 V, then charging the battery at a constant voltage to a current of 0.05 C, and placing the battery in a high-temperature box at 70 °C for 3 days of storage. Measuring thicknesses of the lithium-ion battery with a micrometer when the battery enters and exits the box, and denoting the thickness when the battery enters the box as T0 and denoting the thickness when the battery exits the box as T1.

$$\text{High-temperature storage thickness growth rate (\%)} = (T1/T0 - 1) \times 100\%$$

Cycling performance test:

Charging a formed lithium-ion battery to 4.45 V at 45 °C with a constant current of 2 C, then charging the battery to a current of 0.05 C at a constant voltage, and standing for 5 min and discharge the battery to 3.0 V with 0.5 C. Performing 300 times of such a charging/discharging cycle, and denoting an initial discharging capacity as C0 and denoting a discharging capacity of the 300th cycle as C1.

$$\text{Cycling capacity retention rate (\%)} = C1/C0 \times 100\%$$

**Test results:**

**Table 1**

| Item | Additive | | Fluorocarbonate compound | | a/b | Negative electrode plate | | | a/(X1/X2) | Lithium-ion battery | | |
|---|---|---|---|---|---|---|---|---|---|---|---|---|
| | Type | Mass percentage a% | Type | Mass percentage b% | | Silicon-based material | Carbon material | X1/X2 | | Initial coulombic efficiency/% | Thickness growth rate for 3 days of storage at 70°C/% | Capacity retention rate after 300 cycles/% |
| Comparative Embodiment 1-1 | / | / | FEC | 10% | / | Silicon-carbon | Artificial graphite | 0.30 | / | 85.5 | 35.6 | 50.1 |
| Comparative Embodiment 1-2 | Vinylene carbonate (VC) | 1.0% | FEC | 10% | 0.10 | Silicon-carbon | Artificial graphite | 0.30 | 3.33 | 90.4 | 54.2 | 53.9 |
| Comparative Embodiments 1-3 | Maleic anhydride | 1.0% | FEC | 10% | 0.10 | Silicon-carbon | Artificial graphite | 0.30 | 3.33 | 87.4 | 33 | 55.5 |
| Embodiment 1-1 | Formula (I-1) | 1.0% | FEC | 10% | 0.10 | Silicon-carbon | Artificial graphite | 0.30 | 3.33 | 92.0 | 27.9 | 64.8 |
| Embodiment 1-2 | Formula (I-2) | 1.0% | FEC | 10% | 0.10 | Silicon-carbon | Artificial graphite | 0.30 | 3.33 | 91.8 | 28.6 | 63.5 |
| Embodiment 1-3 | Formula (I-3) | 1.0% | FEC | 10% | 0.10 | Silicon-carbon | Artificial graphite | 0.30 | 3.33 | 90.6 | 29.3 | 61.9 |
| Embodiment 1-4 | Formula (I-4) | 1.0% | FEC | 10% | 0.10 | Silicon-carbon | Artificial graphite | 0.30 | 3.33 | 91.1 | 29.1 | 62.4 |
| Embodiment 1-5 | Formula (I-5) | 1.0% | FEC | 10% | 0.10 | Silicon-carbon | Artificial graphite | 0.30 | 3.33 | 91.2 | 28.9 | 62.8 |
| Embodiment 1-6 | Formula (I-7) | 1.0% | FEC | 10% | 0.10 | Silicon-carbon | Artificial graphite | 0.30 | 3.33 | 91.9 | 28.5 | 63.7 |
| Embodiment 1-7 | Formula (I-9) | 1.0% | FEC | 10% | 0.10 | Silicon-carbon | Artificial graphite | 0.30 | 3.33 | 91.7 | 28.6 | 63.5 |

(continued)

| Item | Additive | | Fluorocarbonate compound | | a/b | Negative electrode plate | | | a/(X1/X2) | Lithium-ion battery | | |
|---|---|---|---|---|---|---|---|---|---|---|---|---|
| | Type | Mass percentage a% | Type | Mass percentage b% | | Silicon-based material | Carbon material | X1/X2 | | Initial coulombic efficiency/% | Thickness growth rate for 3 days of storage at 70°C/% | Capacity retention rate after 300 cycles/% |
| Embodiment 1-8 | Formula (I-11) | 1.0% | FEC | 10% | 0.10 | Silicon-carbon | Artificial graphite | 0.30 | 3.33 | 91.5 | 29.5 | 61.5 |
| Embodiment 1-9 | Formula (I-15) | 1.0% | FEC | 10% | 0.10 | Silicon-carbon | Artificial graphite | 0.30 | 3.33 | 90.9 | 26.7 | 63.3 |
| Embodiment 1-10 | Formula (I-1) | 1.0% | DFEC | 10% | 0.10 | Silicon-carbon | Artificial graphite | 0.30 | 3.33 | 91.2 | 27.0 | 62.4 |
| Embodiment 1-11 | Formula (I-1) | 1.0% | FEMC | 10% | 0.10 | Silicon-carbon | Artificial graphite | 0.30 | 3.33 | 92.2 | 26.4 | 63.6 |
| Embodiment 1-12 | Formula (I-1) | 0.04% | FEC | 10% | 0.00 4 | Silicon-carbon | Artificial graphite | 0.30 | 0.13 | 87.2 | 31.5 | 58.5 |
| Embodiment 1-13 | Formula (I-1) | 0.1% | FEC | 10% | 0.01 0 | Silicon-carbon | Artificial graphite | 0.30 | 0.33 | 88.8 | 30.6 | 60.9 |
| Embodiment 1-14 | Formula (I-1) | 0.5% | FEC | 10% | 0.05 | Silicon-carbon | Artificial graphite | 0.30 | 1.67 | 90.2 | 28.5 | 61.7 |
| Embodiment 1-15 | Formula (I-1) | 3.0% | FEC | 10% | 0.30 | Silicon-carbon | Artificial graphite | 0.30 | 10 | 92.1 | 27.2 | 65.0 |
| Embodiment 1-16 | Formula (I-1) | 5.0% | FEC | 10% | 0.50 | Silicon-carbon | Artificial graphite | 0.30 | 16.6 7 | 89.6 | 26.7 | 61.9 |
| Embodiment 1-17 | Formula (I-1) | 7.0% | FEC | 10% | 0.70 | Silicon-carbon | Artificial graphite | 0.30 | 23.3 3 | 87.5 | 25.9 | 59.3 |
| Embodiment 1-18 | Formula (I-1) | 2.5% | FEC | 3% | 0.83 | Silicon-carbon | Artificial graphite | 0.30 | 8.33 | 88.5 | 25.5 | 59.8 |
| Embodiment 1-19 | Formula (I-1) | 0.5% | FEC | 20% | 0.03 | Silicon-carbon | Artificial graphite | 0.30 | 1.67 | 88.6 | 30.3 | 60.8 |

(continued)

| Item | Additive | | Fluorocarbonate compound | | a/b | Negative electrode plate | | | a/(X1/X2) | Lithium-ion battery | | |
|---|---|---|---|---|---|---|---|---|---|---|---|---|
| | Type | Mass percentage a% | Type | Mass percentage b% | | Silicon-based material | Carbon material | X1/X2 | | Initial coulombic efficiency/% | Thickness growth rate for 3 days of storage at 70°C/% | Capacity retention rate after 300 cycles/% |
| Embodiment 1-20 | Formula (I-1) | 1.0% | FEC | 10% | 0.10 | Silicon-carbon | Artificial graphite | 0.01 | 100 | 92.4 | 19.6 | 70.2 |
| Embodiment 1-21 | Formula (I-1) | 1.0% | FEC | 10% | 0.10 | Silicon-carbon | Artificial graphite | 1.0 | 1 | 83.3 | 29.7 | 61.2 |
| Embodiment 1-22 | Formula (I-1) | 1.0% | FEC | 10% | 0.10 | Silicon-carbon | Artificial graphite | 2.5 | 0.4 | 78.5 | 31.6 | 57.0 |
| Embodiment 1-23 | Formula (I-1) | 1.0% | FEC | 10% | 0.10 | Silicon-oxygen | Artificial graphite | 0.01 | 100 | 93.6 | 16.6 | 74.3 |
| Embodiment 1-24 | Formula (I-1) | 1.0% | FEC | 10% | 0.10 | Silicon-oxygen | Artificial graphite | 0.30 | 3.33 | 92.8 | 25.6 | 68.5 |
| Embodiment 1-25 | Formula (I-1) | 1.0% | FEC | 10% | 0.10 | Silicon-oxygen | Artificial graphite | 1.0 | 1 | 89.1 | 27.7 | 64.6 |
| Embodiment 1-26 | Formula (I-1) | 1.0% | FEC | 10% | 0.10 | Silicon-oxygen | Artificial graphite | 3.00 | 0.33 | 83.9 | 29.5 | 59.3 |

In Table 1, "/" indicates that the material is not added. Table 1 demonstrates effects of mass percentages and compositions of compounds of Formula (I) and fluorocarbonate compounds on the initial coulombic efficiency, high-temperature storage gas production, and high-temperature cycle performance of lithium-ion batteries. The results show that compared with the VC and the maleic anhydride, the compounds of Formula (I) can significantly enhance the initial coulombic efficiency of the lithium-ion batteries and improve high-temperature storage and cycling performance of the lithium-ion batteries. This is mainly because the compound of Formula (I) can be polymerized to form a film on a surface of a negative electrode to introduce a rigid bridge ring structure in the SEI film, which inhibits negative electrode expansion, reduces film-forming consumption of an electrolyte, and enhances initial efficiency of the batteries. Besides, an anhydride/amide group in the compound of Formula (I) synchronously forms a film on a surface of an active material, and minor amounts of water and acid in the electrolyte can be captured, to further inhibit decomposition and gas production of $Li_2CO_3$ components in the SEI film at a high temperature, thereby improving the high-temperature storage performance of the lithium-ion battery to a large extent. In addition, due to a steric hindrance of the bridge ring structure in the compound of Formula (I), relatively small film-forming impedance can be obtained, and dense accumulation of by-products on the surface of the active material during cycling can be inhibited, so that transport of lithium ions between the active material and the electrolyte can be promoted, thereby further improving cycling performance of the lithium-ion batteries.

**Table 2**

| Item | Compound of Formula I | | Hole structure of a negative active material layer | | | $a/(\pi r d \sigma)$ | Lithium-ion battery performance | | |
|---|---|---|---|---|---|---|---|---|---|
| | Type | Mass percentage a% | Hole diameter r (μm) | Hole depth d (μm) | Quantity σ (per $mm^2$) of holes | | Initial coulombic efficiency/% | Thickness growth rate for 3 days of storage at 70°C/% | Capacity retention rate after 300 cycles/% |
| Comparative Embodiment 2-1 | / | / | 50 | 50 | 25 | / | 81.1 | 39.3 | 54.7 |
| Comparative Embodiment 1-1 | / | / | / | / | / | / | 85.5 | 35.6 | 50.1 |
| Embodiment 1-1 | Formula (I-1) | 1.0% | / | / | / | / | 92.0 | 27.9 | 64.8 |
| Embodiment 2-1 | Formula (I-1) | 1.0% | 8 | 50 | 25 | 0.32 | 91.8 | 28.3 | 66.1 |
| Embodiment 2-2 | Formula (I-1) | 1.0% | 10 | 50 | 25 | 0.25 | 90.4 | 29.8 | 69.4 |
| Embodiment 2-3 | Formula (I-1) | 1.0% | 50 | 50 | 25 | 0.05 | 88.8 | 31.2 | 70.1 |
| Embodiment 2-4 | Formula (I-1) | 1.0% | 80 | 50 | 25 | 0.03 | 84.2 | 36.4 | 62.0 |
| Embodiment 2-5 | Formula (I-1) | 1.0% | 110 | 50 | 25 | 0.02 | 80.9 | 39.4 | 58.1 |
| Embodiment 2-6 | Formula (I-1) | 1.0% | 50 | 1 | 25 | 2.55 | 92.0 | 26.4 | 65.0 |
| Embodiment 2-7 | Formula (I-1) | 1.0% | 50 | 10 | 25 | 0.25 | 91.8 | 28.8 | 66.4 |
| Embodiment 2-8 | Formula (I-1) | 1.0% | 50 | 80 | 25 | 0.03 | 86.8 | 34.2 | 68.8 |
| Embodiment 2-9 | Formula (I-1) | 1.0% | 50 | 100 | 5 | 0.13 | 85.4 | 29.9 | 67.9 |
| Embodiment 2-10 | Formula (I-1) | 1.0% | 50 | 80 | 0.5 | 1.59 | 91.9 | 28.6 | 65.1 |

(continued)

| Item | Compound of Formula I | | Hole structure of a negative active material layer | | | a/(πrdσ) | Lithium-ion battery performance | | |
|---|---|---|---|---|---|---|---|---|---|
| | Type | Mass percentage a% | Hole diameter r (μm) | Hole depth d (μm) | Quantity σ (per $mm^2$) of holes | | Initial coulombic efficiency/% | Thickness growth rate for 3 days of storage at 70°C/% | Capacity retention rate after 300 cycles/% |
| Embodiments 2-11 | Formula (I-1) | 3.0% | 50 | 80 | 20 | 0.12 | 92.2 | 24.9 | 74.2 |
| Embodiment 2-12 | Formula (I-1) | 1.0% | 50 | 1 | 5 | 12.73 | 92.1 | 27.8 | 64.5 |
| Embodiment 2-13 | Formula (I-1) | 2.5% | 30 | 70 | 25 | 0.15 | 92.1 | 24.3 | 73.3 |
| Embodiment 2-14 | Formula (I-1) | 1.5% | 20 | 3 | 10 | 7.96 | 92.0 | 24.6 | 66.9 |

In Table 2, "/" indicates that the material is not added. Table 2 demonstrates effects of the hole diameter, the hole depth, and the hole quantity of the negative active material layer and interaction with a compound of Formula (I) on the initial coulombic efficiency and high-temperature storage and cycling performance of lithium-ion batteries. The results show that the hole structure of the negative active material layer has an effect on the initial coulombic efficiency and high-temperature storage gas production of the lithium-ion batteries, and addition of the compound of Formula (I) can significantly improve initial coulombic efficiency and high-temperature storage performance of a negative electrode with an artificial hole structure. When the hole structure of the active material layer and the compound of Formula (I) satisfy $8 \leq r \leq 50$, $3 \leq d \leq 80$, $5 \leq \sigma \leq 25$, and $0.05 \leq a/(\pi r d \sigma) \leq 8$, the compound of Formula (I) can be better polymerized to form a film, so as to inhibit expansion of the negative electrode, reduce film formation consumption of an electrolyte, improve initial efficiency of the batteries, and greatly improve the high-temperature storage and cycling performance of the lithium-ion batteries.

Although the illustrative embodiments have been demonstrated and described, a person skilled in the art should understand that the above embodiments are not to be construed as a limitation of this application, and embodiments may be altered, substituted, and modified without departing from the spirit, principles, and scope of this application.

## Claims

1. An electrolyte, wherein the electrolyte comprises a compound of Formula (I) and a fluorocarbonate compound, wherein

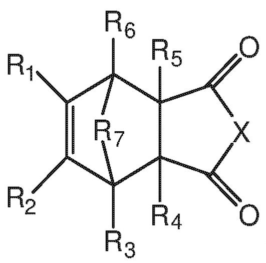

Formula (I),

wherein
in Formula (I),

X is selected from an oxygen atom or N-$R_8$;
$R_1$, $R_2$, $R_3$, $R_4$, $R_5$, $R_6$, and $R_8$ are each independently selected from a hydrogen atom, a halogen atom, substituted or unsubstituted $C_1$ to $C_{10}$ alkyl, substituted or unsubstituted $C_2$ to $C_{10}$ alkenyl, substituted or unsubstituted $C_2$ to $C_{10}$ alkynyl, substituted or unsubstituted $C_6$ to $C_{10}$ aryl, substituted or unsubstituted $C_1$ to $C_{10}$

alkoxy, substituted or unsubstituted $C_2$ to $C_{10}$ enyloxy, substituted or unsubstituted $C_2$ to $C_{10}$ alkynyloxy, substituted or unsubstituted $C_6$ to $C_{10}$ aryloxy, substituted or unsubstituted $C_1$ to $C_{10}$ alkoxyalkyl, substituted or unsubstituted $C_1$ to $C_{10}$ carboxyl, substituted or unsubstituted $C_2$ to $C_{10}$ carboxylate, substituted or unsubstituted $C_2$ to $C_{10}$ carbonate, cyano, or amino, a substituted or unsubstituted $C_1$ to $C_{10}$ nitrogen-containing group, a substituted or unsubstituted $C_1$ to $C_{10}$ sulfur-containing group, a substituted or unsubstituted $C_1$ to $C_{10}$ boron-containing group, a substituted or unsubstituted $C_1$ to $C_{10}$ silicone-containing group, or a substituted or unsubstituted $C_1$ to $C_{10}$ phosphorus-containing group;

$R_7$ is selected from substituted or unsubstituted $C_1$ to $C_{10}$ alkylene, substituted or unsubstituted $C_3$ to $C_{10}$ cycloalkylene, a substituted or unsubstituted $C_1$ to $C_{10}$ oxygen-containing group, or a substituted or unsubstituted $C_1$ to $C_{10}$ nitrogen-containing group; and

when substituted, a substituent group comprises at least one of a halogen atom or cyano.

**2.** The electrolyte according to claim 1, wherein based on a mass of the electrolyte, a mass percentage of the compound of Formula (I) is a%, and a mass percentage of the fluorocarbonate compound is b%, satisfying at least one of the following conditions:

(1)

$$0.01 \leq a \leq 7;$$

(2)

$$3 \leq b \leq 20;$$

or

(3)

$$0.001 \leq a/b \leq 1.$$

**3.** The electrolyte according to claim 2, wherein the electrolyte satisfies at least one of the following conditions:

(1)

$$0.1 \leq a \leq 5;$$

(2)

$$10 \leq b \leq 20;$$

or

(3)

$$0.03 \leq a/b \leq 0.8.$$

**4.** The electrolyte according to claim 1, wherein the compound of Formula (I) comprises at least one of a compound of Formula (I-1) to a compound of Formula (I-20):

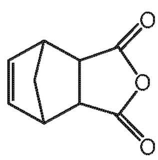 Formula (I-1), 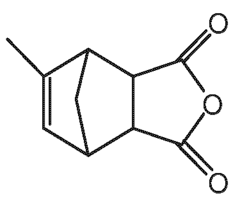 Formula (I-2), 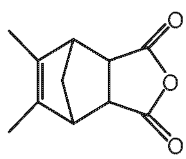

Formula (I-3), 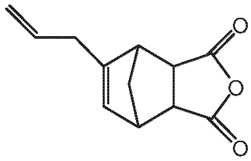 Formula (I-4), 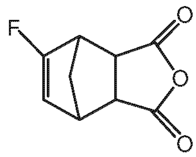 Formula (I-5),

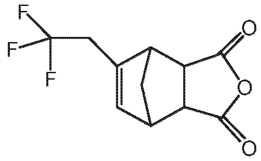 Formula (I-6), 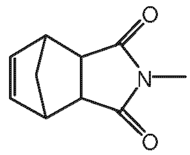 Formula (I-7),

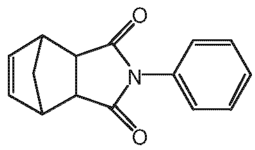 Formula (I-8), 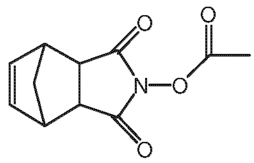 Formula (I-9),

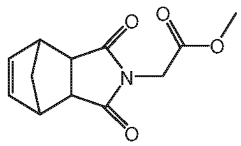 Formula (I-10), 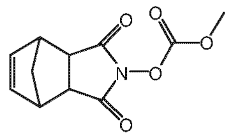 Formula (I-11),

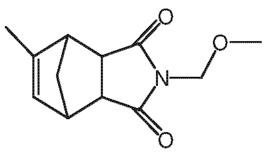 Formula (I-12), 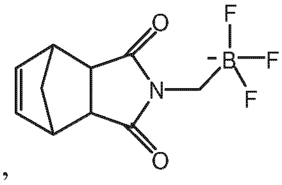 Formula (I-13),

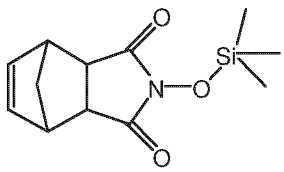 Formula (I-14), 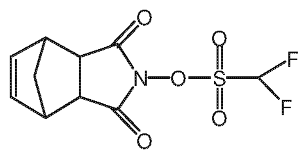 Formula (I-15),

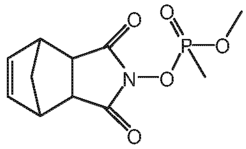 Formula (I-16), 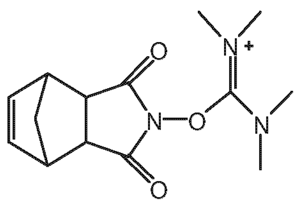 Formula (I-17),

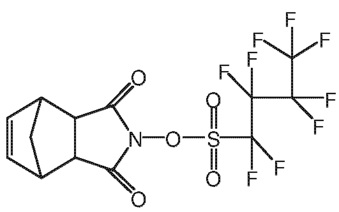 Formula (I-18), 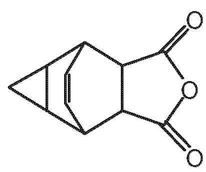 Formula (I-19),

or

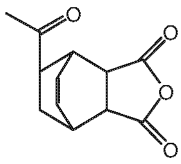
Formula (I-20).

5. The electrolyte according to claim 1, wherein the fluorocarbonate compound comprises at least one of fluoroethylene carbonate, 3,3,3-trifluoropropylene carbonate, methyl 2,2,2-trifluoroethyl carbonate, difluoroethylene carbonate, or bis(2,2,2-trifluoroethyl) carbonate.

6. An electrochemical device, comprising the electrolyte according to any one of claims 1 to 5, wherein the electrochemical device further comprises a negative electrode plate, the negative electrode plate comprises a negative active material layer, and the negative active material layer comprises a silicon-based material and a carbon material.

7. The electrochemical device according to claim 6, wherein a cross-sectional area of the silicon-based material parallel to a thickness direction of the negative electrode plate is denoted as X1 $\mu m^2$, and a cross-sectional area of the carbon material parallel to the thickness direction of the negative electrode plate is denoted as X2 $\mu m^2$, satisfying: $0.01 \leq X1/X2 \leq 3$, and $0.13 \leq a / (X1/X2) \leq 100$.

8. The electrochemical device according to claim 6, wherein the negative active material layer comprises a plurality of first holes extending along a thickness direction of the negative electrode plate; and the electrochemical device satisfies: $0.02 \leq a / (\pi r d \sigma) \leq 13$, wherein $\pi$ denotes a circumference; r $\mu$m denotes an average hole diameter of the plurality of first holes; d $\mu$m denotes an average hole depth of the plurality of first holes; and $\sigma$ per $mm^2$ denotes a quantity of first holes per square millimeter of the negative active material layer.

9. The electrochemical device according to claim 8, wherein the electrochemical device satisfies at least one of the following conditions:

(1)

$$0.05 \leq a/(\pi r d \sigma) \leq 8;$$

(2)

$$8 \leq r \leq 110;$$

(3)

$$1 \leq d \leq 100;$$

or
(4)

$$0.5 \leq \sigma \leq 30.$$

10. The electrochemical device according to claim 9, wherein the electrochemical device satisfies at least one of the following conditions:

(1)

$$8 \leq r \leq 50;$$

(2)

$$3 \leq d \leq 80;$$

or

(3)

$$5 \leq \sigma \leq 25.$$

**11.** The electrochemical device according to claim 6, wherein the electrochemical device satisfies at least one of the following conditions:

(1) the silicon-based material comprises at least one of a silicon-oxygen composite material, a silicon-carbon composite material, or an elemental silicon; or

(2) the carbon material comprises at least one of artificial graphite, natural graphite, soft carbon, or hard carbon.

**12.** An electronic device, comprising the electrochemical device according to any one of claims 6 to 11.

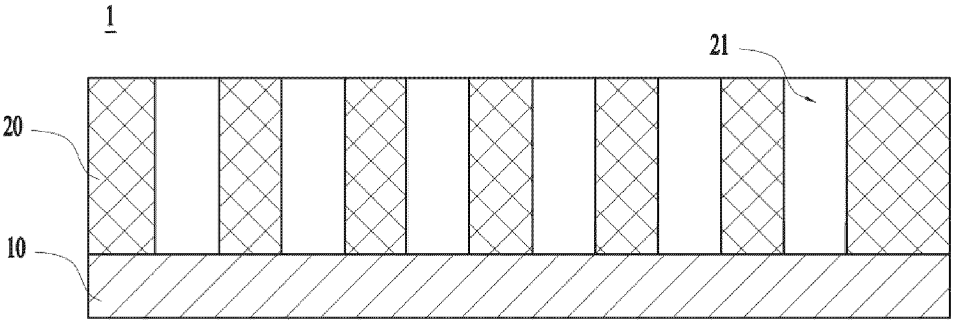


FIG. 1

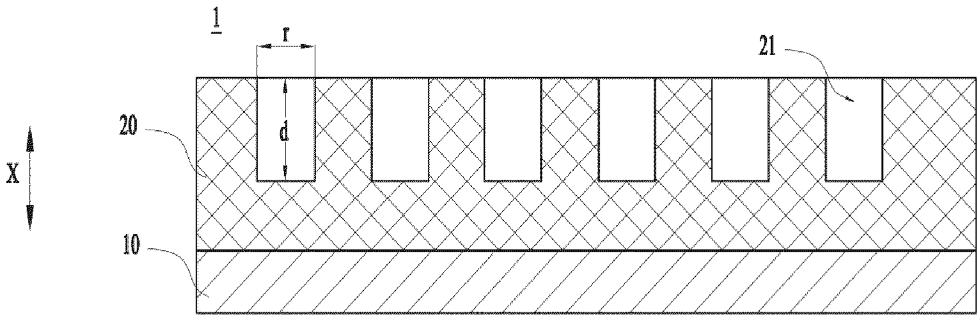


FIG. 2

## INTERNATIONAL SEARCH REPORT

International application No.
**PCT/CN2022/140273**

### A. CLASSIFICATION OF SUBJECT MATTER

H01M 10/0567(2010.01)i

According to International Patent Classification (IPC) or to both national classification and IPC

### B. FIELDS SEARCHED

Minimum documentation searched (classification system followed by classification symbols)

IPC：H01M

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI; ISI; STN: 电解液, 电解质, 降冰片烯, 酸酐, 酰胺, 氟, 碳酸, 酯, 桥, electrolyte, norbornene, anhydride, carbonate, bridge

### C. DOCUMENTS CONSIDERED TO BE RELEVANT

| Category* | Citation of document, with indication, where appropriate, of the relevant passages | Relevant to claim No. |
|---|---|---|
| X | CN 103339784 A (MITSUBISHI CHEMICAL CORP.) 02 October 2013 (2013-10-02) description, paragraphs [0019]-[0716] | 1-12 |
| X | JP 2015056312 A (MITSUBISHI CHEMICAL CORP.) 23 March 2015 (2015-03-23) description, paragraphs [0006]-[0253] | 1-12 |
| X | US 2009191464 A1 (SAMSUNG SDI CO., LTD.) 30 July 2009 (2009-07-30) description, paragraphs [0010]-[0076] | 1-12 |
| A | US 2003129500 A1 (WILSON GREATBATCH TECHNOLOGIES, INC.) 10 July 2003 (2003-07-10) entire document | 1-12 |
| A | CN 109690861 A (NEC CORP.) 26 April 2019 (2019-04-26) entire document | 1-12 |

☐ Further documents are listed in the continuation of Box C.　☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **18 July 2023** | **31 July 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2022/140273**

| Patent document cited in search report | | | Publication date (day/month/year) | Patent family member(s) | | | Publication date (day/month/year) |
|---|---|---|---|---|---|---|---|
| CN | 103339784 | A | 02 October 2013 | KR | 20140040284 | A | 02 April 2014 |
| | | | | KR | 101690843 | B1 | 28 December 2016 |
| | | | | KR | 20140036148 | A | 25 March 2014 |
| | | | | US | 2013316229 | A1 | 28 November 2013 |
| | | | | US | 9653753 | B2 | 16 May 2017 |
| | | | | WO | 2012105404 | A1 | 09 August 2012 |
| | | | | EP | 2672561 | A1 | 11 December 2013 |
| | | | | EP | 2672561 | A4 | 07 June 2017 |
| | | | | EP | 2672561 | B1 | 17 April 2019 |
| JP | 2015056312 | A | 23 March 2015 | | None | | |
| US | 2009191464 | A1 | 30 July 2009 | US | 8802285 | B2 | 12 August 2014 |
| | | | | KR | 20090083710 | A | 04 August 2009 |
| | | | | KR | 101473321 | B1 | 24 December 2014 |
| US | 2003129500 | A1 | 10 July 2003 | US | 6759170 | B2 | 06 July 2004 |
| CN | 109690861 | A | 26 April 2019 | US | 2019252716 | A1 | 15 August 2019 |
| | | | | JPWO | 2018052077 | A1 | 27 June 2019 |
| | | | | JP | 7059931 | B2 | 26 April 2022 |
| | | | | WO | 2018052077 | A1 | 22 March 2018 |

Form PCT/ISA/210 (patent family annex) (July 2022)